(19) Europäisches Patentamt
European Patent Office
Office européen des brevets

(11) Veröffentlichungsnummer: **0 193 757 B1**

(12) **EUROPÄISCHE PATENTSCHRIFT**

(45) Veröffentlichungstag der Patentschrift: **17.11.88**

(51) Int. Cl.⁴: **C 08 G 77/42**, C 08 G 63/62

(21) Anmeldenummer: **86101800.0**

(22) Anmeldetag: **13.02.86**

(54) **Neue Polydiorganosiloxan-Polycarbonat-Blockcopolymere.**

(30) Priorität: **23.02.85 DE 3506472**

(43) Veröffentlichungstag der Anmeldung: **10.09.86 Patentblatt 86/37**

(45) Bekanntmachung des Hinweises auf die Patenterteilung: **17.11.88 Patentblatt 88/46**

(84) Benannte Vertragsstaaten: **DE FR GB IT NL**

(56) Entgegenhaltungen:
**EP - A - 0 010 602**
**EP - A - 0 162 245**
**US - A - 3 419 634**

(73) Patentinhaber: **BAYER AG, Konzernverwaltung RP Patentabteilung, D-5090 Leverkusen 1 Bayerwerk (DE)**

(72) Erfinder: **Paul, Winfried, Dr., Bethelstrasse 22, D-4150 Krefeld 1 (DE)**
Erfinder: **Nouvertné, Werner, Dr., Scheiblerstrasse 95, D-4150 Krefeld 1 (DE)**
Erfinder: **Löwer, Hartmut, Dr., 820 Linda Lane, Pittsburgh Pennsylvania 15243 (US)**
Erfinder: **Witman, Mark William, Dr., 1856 Taper Drive, Pittsburgh Pennsylvania 15249 (US)**
Erfinder: **Grigo, Ulrich, Dr., Michelsheide 9, D-4152 Kempen 3 (DE)**

**EP 0 193 757 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung ist die Herstellung von thermoplastischen Poly(diorganosiloxan)-Polycarbonat-Blockcopolymeren mit mittleren Molekulargewichten $\overline{M}w$ (Gewichtsmittel) von 10 000 bis 30 000, vorzugsweise von etwa 15 000 bis 25 000 (ermittelt in bekannter Weise durch Ultrazentrifugation oder Streulichtmessung) und mit einem Gehalt an Poly(diorganosiloxan)-Struktureinheiten zwischen 10 Gew.-% und 0,5 Gew.-%, vorzugsweise zwischen 7 Gew.-% und 1 Gew.-%, bezogen jeweils auf Gesamtgewicht des Blockcopolymeren, wobei die Poly(diorganosiloxan)-Strukturen einen Polymerisationsgrad zwischen 5 und 100, vorzugsweise zwischen 20 und 80 haben, aus

a) $\alpha,\omega$-Bis-hydroxyaryloxy-polydiorganosiloxanen mit Polymerisationsgraden zwischen 5 und 100, vorzugsweise zwischen 20 und 80, vorzugsweise solchen der Formel (I),

b) anderen Diphenolen, vorzugsweise der Formel (II),

c) Kettenabbrechern und gegebenenfalls

d) Verzweigern,

nach den bekannten Methoden des Zweiphasengrenzflächenverfahrens mit einem Carbonatspender, die dadurch gekennzeichnet ist, dass man als Kettenabbrecher Mono-alkylphenole oder Di-alkylphenole mit insgesamt 8 bis 20 C-Atomen in den Alkylsubstituenten, vorzugsweise solche der Formel (III)

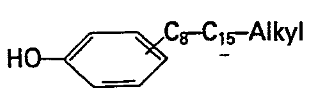 (III)

in Mengen von 1,0 Mol-% bis 10 Mol-%, bezogen auf eingesetzte Diphenole der Komponente b), einsetzt, wobei quantitative Umsetzung der phenolischen Komponenten gegeben ist.

Gegenstand der vorliegenden Erfindung sind ausserdem die nach dem erfindungsgemässen Verfahren erhältlichen Blockcopolymeren mit Monoalkylphenyl- oder Dialkylphenyl-Endgruppen.

Diese Produkte haben ein verbessertes Entformungs- und Fliessverhalten und einen Zäh-Spröd-Übergang, der zu niederen Temperaturen verschoben ist.

Polydiorganosiloxan-Polycarbonat-Blockcopolymere sind literaturbekannt (siehe beispielsweise US-PS 3 189 662, US-PS 3 419 634, DE-OS 3 334 782 bzw. EP 0 122 535.

Polycarbonate mit Alkylphenylendgruppen sind ebenfalls bekannt aus JA-OS 34 992/76, aus der DE-OS 2 842 005 und aus JA-OS 13 3149/82.

Aus der EP-A- 0 010 602 ist die Verbesserung der kritischen Breite durch die anmeldungsgemäss verwendeten Kettenabbrecher an Polycarbonaten bereits bekannt.

Gegenüber den aus US-PS 3 419 634 bekannten Polydiorganosiloxan/Polycarbonat-Blockcopolymeren haben die Blockcopolymeren der vorliegenden Erfindung überraschenderweise ein verbessertes Fliessverhalten.

Erfindungsgemäss einzusetzende $\alpha,\omega$-Bishydroxy-aryloxypolydiorganosiloxane gemäss Komponente a) sind z. B. aus US-PS 3 419 634 bekannt.

Bevorzugt einzusetzende $\alpha,\omega$-Bis-hydroxy-aryloxyendgruppen-haltige Polydiorganosiloxane sind solche der Formel (I)

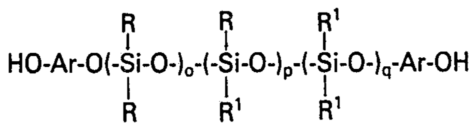 (I)

worin

Ar gleiche oder verschiedene Arylenreste aus Diphenolen mit vorzugsweise 6 bis 30 C-Atomen sind, und

R und $R^1$ gleich oder verschieden sind und lineares Alkyl, verzweigtes Alkyl, halogeniertes lineares Alkyl, halogeniertes verzweigtes Alkyl, Aryl oder halogeniertes Aryl, vorzugsweise aber Methyl bedeuten, und

die Anzahl der Diorganosiloxy-Einheiten $n = o + p + q = 5$ bis 100, vorzugsweise 20 bis 80, ist.

Alkyl ist in vorstehender Formel (I) beispielsweise $C_1$–$C_{20}$-Alkyl; Aryl ist in vorstehender Formel (I) $C_6$–$C_{14}$-Aryl. Halogeniert bedeutet in vorstehender Formel I teilweise oder vollständig chloriert, bromiert oder fluoriert. Beispiele für Alkyle, Aryle, halogenierte Alkyle und halogenierte Aryle sind Methyl, Ethyl, Propyl, n-Butyl, tert.-Butyl, Phenyl, Naphthyl, Chlormethyl und Trifluorpropyl.

Zur Herstellung der erfindungsgemäss einzusetzenden $\alpha,\omega$-Bis-hydroxy-aryloxypolydiorganosiloxane gemäss Komponente

a) vorzugsweise der Formel (I) einzusetzende Diphenole sind:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-sulfoxide
Bis-(hydroxyphenyl)-sulfone und
$\alpha,\alpha$-Bis-(hydroxyphenyl)-diisopropylbenzole

sowie deren kernalkylierte und kernhalogenierte Verbindungen. Diese und weitere geeignete aromatische Dihydroxyverbindungen sind z. B. in den US-PS 3 271 367 und 2 999 846 und in den Deutschen Offenlegungsschriften 2 063 050 und 2 211 957 aufgeführt.

Vorzugsweise geeignete Diphenole zur Herstellung der $\alpha,\omega$-Bishydroxy-aryloxy-diorganosiloxane gemäss Komponente

a) sind solche der Formel (II)

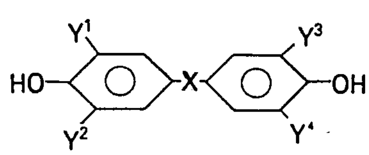 (II),

worin

X eine Einfachbindung,

$-CH_2-$, 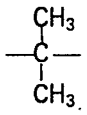 , 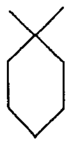 , O,S,$SO_2$

oder

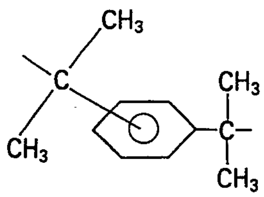

bedeuten und

$Y^1$ bis $Y^4$ gleich oder verschieden sind und Wasserstoff, $C_1$–$C_4$-Alkyl, vorzugsweise Methyl, oder Halogen, vorzugsweise Chlor oder Brom bedeuten.

Bevorzugte Diphenole sind beispielsweise
2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Erfindungsgemäss einsetzbare andere Diphenole gemäss Komponente b) sind die vorstehend aufgeführten, wobei wiederum die bevorzugten der Formel (II) entsprechen.

Erfindungsgemäss geeignete Monoalkylphenole bzw. Dialkylphenole können lineare Alkyl-Reste und verzweigte Alkyl-Reste enthalten. Beispiele für die erfindungsgemäss verwendbaren Kettenabbrecher gemäss Komponente c) sind p-Isooctylphenol, p-Nonylphenol, 3,5-Di-tert.-butyl-phenol, p-tert.-Octyl-phenol, p-Dodecyl-phenol, 2-(3,5-Dimethylheptyl)-phenol und 4-(3,5-Dimethylheptyl)-phenol.

Anstelle der Monoalkylphenole bzw. Dialkylphenole können auch deren Halogenkohlensäureester eingesetzt werden.

Als Verzweiger gemäss Komponente d) sind solche mit drei oder mehr als drei funktionellen Gruppen, insbesondere solche mit drei oder mehr als drei phenolischen Hydroxylgruppen einsetzbar, wobei die üblicherweise bekannten Mengen an Verzweiger zwischen 0,05 und 2 Mol-%, bezogen auf Diphenole der Komponente b), einzuhalten sind. Die Herstellung verzweigter Polycarbonate sind beispielsweise in den DE-OS 1 570 533 und DE-OS 1 595 762 sowie in US-PS 3 544 514 beschrieben.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4'-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Die Zugabe der α,ω-Bis-hydroxyaryloxyendgruppen-haltigen Polydiorganosiloxane und der Kettenabbrecher im Zweiphasengrenzflächenverfahren kann zusammen mit den anderen Diphenolen gemäss Komponente b) vor der Phosgeneinleitung erfolgen oder separat während oder nach der Phosgeneinleitung, in jedem Fall aber vor der Zugabe des Polykondensationskatalysators.

Geeignete organische Lösungsmittel für das Zweiphasengrenzflächenverfahren sind die für die thermoplastischen Polycarbonate bekannten, wie beispielsweise Methylenchlorid oder Chlorbenzol.

Geeignete basische Verbindungen für die Bildung der wässrigen alkalischen Phase sind Lösungen von LiOH, NaOH, KOH, $Ca(OH)_2$ und/oder $Ba(OH)_2$ in Wasser.

Geeignete Katalysatoren für die Polykondensation nach dem Zweiphasengrenzflächenverfahren sind die für die Polycarbonatsynthese bekannten tertiären aliphatischen Aminkatalysatoren wie Trimethylamin, Triethylamin, n-Tripropylamin, n-Tributylamin oder N-Ethylpiperidin; gegebenenfalls können auch die bekannten quartären Ammoniumsalze wie beispielsweise Tetrabutylammoniumbromid eingesetzt werden.

Die Menge an Katalysator für das Zweiphasengrenzflächenverfahren variiert je nach eingesetztem Diphenol zwischen 0,2–5 Mol-%, bei Einsatz von tetramethylsubstituierten Diphenolen zwischen 5–10 Mol-%, bezogen jeweils auf die Gesamtmenge an eingesetzten Diphenolen gemäss Komponente b).

Die Mengen an organischer Phase werden vorzugsweise so gewählt, dass die Zweiphasengrenzflächenpolykondensation mit 5 bis 20%iger organischer Lösung, vorzugsweise 10 bis 15%iger organischer Lösung durchgeführt wird.

Bei der Herstellung nach dem Zweiphasengrenzflächenverfahren sind die Mengen an wässrig alkalischer Phase volumenmässig vorzugsweise gleich der Menge der gesamten organischen Phase. Sie können volumenmässig auch grösser oder kleiner als die gesamten Mengen der organischen Phase sein.

Der pH-Wert der wässrigen Phase liegt während der Reaktion zwischen pH 9–14, vorzugsweise zwischen pH 12–13.

Die jeweils einzusetzenden Reaktantenverhältnisse von anderem Diphenol gemäss Komponente b) zu Hydroxy-aryloxy-terminiertem Polydiorganosiloxan gemäss Komponente a) richten sich nach dem zu erzielenden Gehalt an Poly-(diorganosiloxan)-Einheiten im erfindungsgemäss herzustellenden Blockcopolymeren, wobei normalerweise die quantitative Umsetzung der Reaktanten gegeben ist.

Als Carbonatspender für die erfindungsgemässe Herstellung nach dem Zweiphasengrenzflächenverfahren dienen in bekannter Weise Kohlensäurehalogenide, insbesondere Kohlensäurechloride, wie beispielsweise Phosgen, $COBr_2$, oder die

Bischlorkohlensäureester von Diphenolen in entsprechender Menge, wobei jeweils pro Halogen-Kohlensäure-Gruppe weniger als ½ Mol Diphenol verwendet wird.

Die Isolierung der erfindungsgemässen aromatischen thermoplastischen Blockcopolymeren kann nach der von der Polycarbonatsynthese nach dem Zweiphasengrenzflächenverfahren her bekannten Methode erfolgen. Hierbei wird die organische, das Copolycarbonat gelöst enthaltende Phase abgetrennt, gewaschen und anschliessend das Copolycarbonat durch Eindampfen der Lösung isoliert, wobei als Endstufe des Aufarbeitungsprozesses vorzugsweise ein Ausdampfextruder benutzt wird.

Den erfindungsgemäss erhältlichen Blockcopolymeren können übliche Zusatzstoffe vor, während oder nach deren Herstellung zugegeben werden. Erwähnt seien in diesem Zusammenhang beispielsweise Farbstoffe, Pigmente, Stabilisatoren gegen Feuchtigkeits-, Hitze- und UV-Einwirkung, Füllstoffe wie Glaspulver, Quarzerzeugnisse, Graphit, Molybdänsulfid, Metallpulver sowie Glasfasern.

Die erfindungsgemässen Blockcopolymeren sind überall dort verwendbar, wo die bekannten aromatischen Polycarbonate bislang Verwendung finden und wo zusätzlich gute Fliessfähigkeit gepaart mit verbessertem Entformungsverhalten und hoher Zähigkeit bei niedrigen Temperaturen erforderlich ist, wie z. B. zur Herstellung von grossen KFZ-Aussenteilen oder Schaltkästen für den Ausseneinsatz.

## Beispiele

Die Bestimmung des Siloxangehaltes, d. h. des Anteils der Dimethylsiloxan-Einheiten in Gew.-%, bezogen auf das Gesamtgewicht des Blockcopolymeren, erfolgte durch Kernresonanzspektrometrie. Als mittlere Siloxanblocklänge wird der durch Bestimmung der Endgruppen am Ausgangsmaterial Polysiloxan ermittelte Polymerisationsgrad $\overline{n}$ angegeben.

Die relative Lösungsviskosität wurde bei 25 °C und einer Konzentration von 5 g/l in Dichlormethan gemessen.

Die Izod-Kerbschlagzähigkeit wurde an Prüfkörpern von 3,2 mm bzw. 6,4 mm Breite in Anlehnung an ASTM/D 256 bestimmt.

Die Wärmeformbeständigkeit wurde nach Methode Vicat (VST/B/120) gemäss DIN 53460/ISO 368 ermittelt.

Die Entformungskraft wurde auf einem Hülsenwerkzeug bestimmt.

A. Herstellung von Alkylphenol-gestopptem Polycarbonat

### Vergleichsbeispiel 1

3,42 kg Bisphenol A gelöst in 6,67 kg 45%iger Natronlauge und 37,7 kg Wasser werden mit 26,5 kg Methylenchlorid und 22,1 kg Chlorbenzol bei 20°C vorgelegt. In die gerührte Mischung wird in ca. 15 min unter Rühren eine Lösung von 154,7 g 4-(1,1,3,3-Tetramethyl-butyl)-phenol in 100 g Methylenchlorid gegeben, anschliessend bei 13–14 und 21–25 °C in 1 h 2,23 kg Phosgen eingeleitet. 15 g Triethylamin werden danach hinzugegeben und noch 30′ gerührt.

Die bisphenolatfreie wässrige Phase wird abgetrennt, die organische Phase nach Ansäuern mit Phosphorsäure mit Wasser neutral gewaschen und von Lösungsmitteln befreit.

B. Herstellung von Polydimethylsiloxan mit Bisphenol A-Endgruppen

In ein Gefäss, das mit Kühler, Thermometer, Tropftrichter und Rührer versehen ist, gibt man 19,2 Gew.-Teile Bisphenol A und 1800 Gew.-Teile Chlorbenzol. Es wird auf 100 °C erwärmt und mit 11,6 Gew.-Teilen Kaliumcarbonat versetzt. Danach gibt man zu der Mischung unter Rückfluss über eine Zeit von 15 min eine Lösung von 178 Gew.-Teilen α,ω-Bisacetoxypolydimethylsiloxan, $\overline{P}_n$ = 84, in 178 Gew.-Teilen Chlorbenzol, wobei das Rühren für zwei weitere Stunden fortgesetzt wird. Es wird auf etwa 80 °C abgekühlt und noch heiss filtriert.

C. Herstellung von Polydimethylsiloxan-Polycarbonat-Blockcopolymeren

### Vergleichsbeispiel 2

Die unter B beschriebene Lösung von Polydimethylsiloxan mit Bisphenol A-Endgruppen wird in einem Reaktionskolben, der mit Rührer, Phosgeneinlassrohr, Rückflusskühler, Innenthermometer und Tropftrichter ausgerüstet ist, mit 3035 Gew.-Teilen Bispenol A, 3034 Gew.-Teilen Natriumhydroxid, 34700 Gew.-Teilen Wasser, 17800 Gew.-Teilen Dichlormethan und 13100 Gew.-Teilen Chlorbenzol und 74,2 Gew.-Teilen Phenol versetzt. Bei Raumtemperatur werden 2216 Gew.-Teile Phosgen eingeleitet, wobei der pH durch Zugabe 45%iger Natronlauge zwischen 12 und 13 gehalten wird. Das Einleiten nimmt ca. eine Stunde in Anspruch. Danach werden 11 Gew.-Teile Triethylamin zugesetzt und weitere 45 min bei pH 12 bis 13 nachgerührt. Das Cokondensat wird nach für Polycarbonat gängigen Methoden aufgearbeitet.

### Beispiel 3 (erfindungsgemäss)

Die unter B beschriebene Lösung von Polydimethylsiloxan mit Bisphenol A-Endgruppen wird in einem Reaktionskolben, der mit Rührer, Phosgeneinlassrohr, Rückflusskühler, Innenthermometer und Tropftrichter ausgerüstet ist, mit 3035 Gew.-Teilen Bisphenol A, 3024 Gew.-Teilen Natriumhydroxid, 34700 Gew.-Teilen Wasser, 17800 Gew.-Teilen Dichlormethan und 13100 Gew.-Teilen Chlorbenzol und 164,7 Gew.-Teilen 4-(1,1,3,3-Tetramethylbutyl)-phenol versetzt. Bei Raumtemperatur werden 2216 Gew.-Teile Phosgen eingeleitet, wobei der pH durch Zugabe 45%iger Natronlauge zwischen 12 und 13 gehalten wird. Das Einleiten nimmt ca. eine Stunde in Anspruch. Danach werden 11 Gew.-Teile Triethylamin zugesetzt und weitere 45 min bei pH 12 bis 13 nachgerührt. Das Cokondensat wird nach für Polycarbonat gängigen Methoden aufgearbeitet.

D. Tabellarischer Eigenschaftsvergleich

| Eigenschaften | Vergleichsbeispiel 1 | Vergleichsbeispiel 2 | Beispiel 3 |
|---|---|---|---|
| rel. Lösungsviskosität | 1,228 | 1,223 | 1,200 |
| Siloxangehalt (%) | – | 4,8 | 5,3 |
| Siloxanblocklänge (n) | – | 84 | 84 |
| Schmelzenviskosität bei 300 °C/$10^3$ $s^{-1}$ Pa.s | 120 | 131 | 113 |
| Kerbschlagzähigkeit nach Izod (3,2 mm) | | | |
| RT J/m | 8×146/2×567* | 741* | 557* |
| –40 °C J/m | – | 9×495*/1×263 | 381* |
| krit. Temp. °C | RT | –40 | unter –40 |
| Kerbschlagzähigkeit nach Izod (6,4 mm) | | | |
| RT J/m | – | – | 391* |
| 0 °C J/m | – | – | 7×355*/3×320 |
| krit. Temp. °C | oberhalb RT | oberhalb RT | 0 |
| Wärmeformbeständigkeit Vicat (VST/B/120) °C | 140 | 141 | 141 |
| Entformungskraft bei 136 °C Formtemp./300 °C Massetemp. bar | 20 | – | 5 |

* = Zähbruch

**Patentansprüche**

1. Verfahren zur Herstellung von thermoplastischen Poly-(diorganosiloxan)-Polycarbonat-Blockcopolymeren mit mittleren Molekulargewichten $\overline{M}w$ (Gewichtsmittel) von 10 000 bis 30 000 (ermittelt in bekannter Weise durch Ultrazentrifugation oder Streulichtmessung) und mit einem Gehalt an Poly-(diorganosiloxan)-Struktureinheiten zwischen 10 Gew.-% und 0,5 Gew.-%, bezogen jeweils auf Gesamtgewicht des Blockcopolymeren, wobei die Poly-(diorganosiloxan)-Strukturen einen Polymerisationsgrad zwischen 5 und 100 haben aus
a) α,ω-Bis-hydroxyaryloxy-polydiorganosiloxanen mit Polymerisationsgraden zwischen 5 und 100,
b) anderen Diphenolen,
c) Kettenabbrechern und gegebenenfalls
d) Verzweigern
nach den bekannten Methoden des Zweiphasengrenzflächenverfahrens mit einem Carbonatspender, dadurch gekennzeichnet, dass man als Kettenabbrecher Mono-alkylphenole oder Dialkylphenole mit insgesamt 8 bis 20 C-Atomen in den Alkylsubstituenten in Mengen von 1,0 Mol-% bis 10 Mol-%, bezogen auf eingesetzte Diphenole der Komponente b), einsetzt, wobei quantitative Umsetzung der phenolischen Komponenten gegeben ist.

2. Verfahren gemäss Anspruch 1, dadurch gekennzeichnet, dass man Kettenabbrecher der Formel (III)

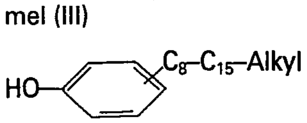

(III)

einsetzt.

3. Poly-(diorganosiloxan)-Polycarbonat-Blockcopolymere, erhältlich nach den Verfahren der Ansprüche 1 und 2.

**Claims**

1. Process for the preparation of thermoplastic poly-(diorganosiloxane)/polycarbonate block copolymers having mean molecular weights $\overline{M}w$ (weight average) of 10,000 to 30,000 (determined in a known manner by ultracentrifugation or measurement by light scattering) and having a content of poly-(diorganosiloxane) structural units of between 10% by weight and 0.5% by weight, relative in each case to the total weight of the block copolymer, the poly-(diorganosiloxane) structures having a degree of polymerisation of between 5 and 100, from
a) α,ω-bis-hydroxyaryloxy polydiorganosiloxanes having degrees of polymerisation of between 5 and 100,
b) other diphenols
c) chain stoppers and, if appropriate,
d) chain-branching agents,
by the known methods of the two-phase boundary process using a carbonate doner, characterised in that the chain stoppers employed are monoalkylphenols or dialkylphenols containing a total of 8 to 20 C atoms in the alkyl substituents, in amounts of from 1.0 mol% to 10 mol%, relative to diphenols of the component b) employed, quantitative reaction of the phenolic components being obtained.

2. Process according to claim 1, characterised in that chain stoppers of the formula (III)

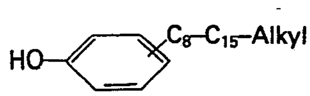

(III)

are employed.

3. Poly-(diorganosiloxane)/polycarbonate block copolymers which can be obtained by the processes of claims 1 and 2.

**Revendications**

1. Procédé de préparation de copolymères séquencés thermoplastiques poly-(diorganosiloxanne)-polycarbonates ayant des poids moléculaires moyens $\overline{M}w$ (moyenne en poids) de 10 000 à 30 000 (déterminé de manière connue par ultracentrifugation ou mesure de diffraction de la lumière) et une teneur en motifs de structure poly-(diorganosiloxanne) de 10% en poids à 0,5% en poids, par rapport au poids total du copolymère séquencé, les structures de poly-(diorganosiloxanne) ayant un degré de polymérisation de 5 à 100, à partir de

a) des α, ω-bis-hydroxyaryloxy-polydiorganosiloxannes ayant des degrés de polymérisation de 5 à 100,

b) d'autres diphénols,

c) des coupeurs de chaînes et le cas échéant

d) des agents ramifiants

par les modes opératoires connus du procédé à l'interface de deux phases avec un agent apportant un carbonate, caractérisé en ce que l'on utilise en tant que coupeurs de chaînes des monoalkylphénols ou des di-alkylphénols contenant au total 8 à 20 atomes de carbone dans les substituants alkyles, en quantités de 1,0 mole % à 10 moles %, par rapport aux diphénols du composant

b) mis en œuvre, avec conversion quantitative des composants phénoliques.

2. Procédé selon la revendication 1, caractérisé en ce que l'on utilise des coupeurs de chaînes de formule III.

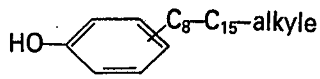

(III)

3. Copolymères séquencés poly-(diorganosiloxanne)-polycarbonates obtenus par les procédés des revendications 1 et 2.